# FASCICULE DE BREVET EUROPEEN

(11) **EP 3 200 579 B1**
(45) Date de publication et mention de la délivrance du brevet: **31.10.2018**
(21) Numéro de dépôt: 15780919.5
(22) Date de dépôt: 18.09.2015
(51) Int. Cl.: A01K 13/00, A45D 24/04, A46B 7/02

(54) **TÊTE DE BROSSE DE TOILETTAGE D'ANIMAUX À PEIGNE RÉTRACTABLE MANUELLEMENT**
BÜRSTENKOPF EINES TIERES MIT MANUELL EINKLAPPBAREM KAMM
HEAD OF AN ANIMAL GROOMING BRUSH WITH MANUALLY RETRACTABLE COMB

(30) Priorité: 30.09.2014 FR 1459273
(43) Date de publication de la demande: 09.08.2017
(73) Titulaire: SSERTSON GROUP, 42610 Saint-Romain Le Puy (FR)
(72) Inventeur: CATHAUD, Eddy, 42240 L'Hopital le Grand (FR)
(74) Mandataire: Jacobacci Coralis Harle
(86) Numéro de dépôt international: PCT/FR2015/052516
(87) Numéro de publication internationale: WO 2016/051046

(56) Documents cités:
- FR-A1- 2 595 539
- FR-A1- 2 835 719
- US-A- 3 626 546
- US-A- 4 860 692
- US-A1- 2013 343 041

## Description

L'invention concerne le toilettage de la fourrure des animaux et plus particulièrement une tête de brosse manuelle.

Pour entretenir la fourrure des animaux domestiques, tels que chiens et chats, il est connu de les toiletter régulièrement, et en particulier de les brosser manuellement avec une brosse composée d'un manche et d'une tête avec un peigne, en général amovible et interchangeable. Dans les brosses actuelles, le peigne est constitué par une lame métallique dont le corps est pourvu de moyens de fixation sur la tête du manche et d'un bord en biseau dans lequel les dents sont réalisées par usinage.

Lors du brossage d'un animal, les poils morts enlevés du pelage par le brossage s'accumulent entre les dents et, peu à peu, limitent l'engagement de la denture du peigne dans le pelage et perturbent le brossage.

Pour remédier à cela, et comme décrit dans les documents FR2999871 et US2009/0126648, des fabricants ajoutent au peigne une palette plane qui peut être déplacée manuellement par un poussoir, sur une face du peigne et dans le sens de son entredent. Le mouvement de nettoyage vers l'extrémité libre des dents chasse les touffes, poils morts et poussières accumulés dans les entredents et permet de reprendre le brossage dans ses conditions d'origine. En général, des moyens à ressort rappellent le poussoir dans sa position initiale de retrait dans la tête. Dans cette position de retrait la palette ne protège pas l'utilisateur de l'agressivité de la denture acérée du peigne. Les dents du peigne métal sont fines et fragiles et, sans une protection supplémentaire, peuvent se tordre et se déformer lorsque la brosse est posée, même pour un bref instant.

Le document US2013/0343041, décrit une brosse épuceuse qui remédie partiellement à ces inconvénients. Le peigne lamellaire est disposé dans un corps en deux parties et peut être déplacé longitudinalement à travers une ouverture entre une position de retrait à l'intérieur du corps, dans laquelle le peigne est protégé et non dangereux pour l'environnement, et une position de brossage, dans laquelle sa denture est hors du corps pour servir au brossage. La rétraction du peigne dans le corps s'effectue par coulissement sur des glissières et provoquent, par le déplacement de sa denture, la butée des poils morts, poussières et autres dépôts prélevés par le brossage, contre les bords de l'ouverture du corps, puis leur éjection de la denture.

Toutefois, cette fonction n'est utilisée que pour faciliter la vision des puces dans les poils de la fourrure, aidée en cela par des moyens extérieurs d'illumination du peigne, et n'est pas adaptée à un lissage du poil.

De plus, le remplacement du peigne n'est pas envisagé, car il nécessite un démontage complet du corps avec recours à des outils, de sorte qu'il n'est pas possible de changer aisément l'outil de toilettage pour le remplacer, en cas d'usure ou pour l'adapter soit à la fourrure de l'animal, soit à la fonction de toilettage, en utilisant des peignes ayant des dents de forme et d'écartement différents.

Enfin, les moyens décrits dans ce document qui régissent les déplacements du peigne et assurent son calage en position ne peuvent pas être transposés tels quels dans une brosse dont la tête courbe est disposée à l'extrémité d'un manche, car les mouvements rectilignes communiqués au peigne pour le déplacer et les mouvements transversaux de calage ne seraient pas compatibles avec l'espace intérieur de la tête. De même, les guidages du peigne seraient insuffisants pour résister aux efforts de brossage et de lissage de la fourrure, efforts bien supérieurs à ceux générés par un épucage minutieux

C'est précisément à ces inconvénients que veut remédier l'invention en fournissant une brosse dont la tête, équipée de moyens d'éjection des poils hors des entredents du peigne, contient un peigne qui, remplaçable sans démontage de cette tête et sans recours à des outils, coopère avec des moyens assurant le calage transversal du peigne dans plusieurs positions.

L'invention d'après la revendication 1 concerne donc une brosse munie d'un manche et d'une tête dont le corps est en deux éléments délimitant un espace intérieur contenant le peigne et présentant une ouverture dont les lèvres assurent l'éjection des poils hors des entredents, le dit espace intérieur contenant aussi des moyens assurant le déplacement de ce peigne, actionnables par un bouton de commande externe à la tête, et des moyens de calage sur la tête d'au moins une position longitudinale du peigne.

Selon l'invention, le peigne est lié, de manière démontable et par coulissement transversal, à un berceau déplaçable en translation dans la tête, et ce berceau est lié aux moyens assurant son déplacement, moyens comprenant :
- une bielle, dont l'une des extrémités est articulée sur le berceau,
- et un levier de commande de déplacement, qui, articulé avec l'autre extrémité de la bielle :
   ∘ de première part, est muni d'au moins un tenon longitudinal, traversant la paroi de l'élément supérieur de la tête, pour recevoir le bouton de commande,
   ∘ de deuxième part, est solidaire de doigts cylindriques latéraux servant à l'articulation de la bielle sur le corps et coopérant avec des crans de positionnement ménagés dans l'élément supérieur de la tête, ces crans assurant le calage du peigne dans plusieurs positions du peigne,
   ∘ et, de troisième part, contient un corps d'articulation monté pivotant dans l'élément inférieur de la tête et sur lequel il est monté coulissant avec interposition d'un ressort travaillant en extension, pour plaquer ses doigts cylindriques contre les crans de calage.

Avec cet aménagement, le peigne n'est lié qu'au berceau et c'est le berceau qui est lié aux moyens de commande de déplacement du peigne, de manière mécanique et par l'intermédiaire d'un embiellage dont la structure et la cinématique s'intègrent dans l'espace interne de la tête et permettent de communiquer au peigne plusieurs positions hors de la tête, pour ajuster sa longueur de sortie à la longueur des poils.

Dans une forme d'exécution, le berceau a une section transversale en forme de U dont les ailes sont munies de crans internes se faisant vis-à-vis et aptes à s'engager dans des rainures opposées ménagées dans l'extrémité arrière du peigne, perpendiculairement à la denture et à l'opposée de celle-ci, ces ailes comportant à l'extérieur et de chaque côté, des rainures de guidage venant coiffer des nervures ménagées pour elles dans les deux éléments de la tête, parallèlement à la direction de déplacement du berceau.

Ainsi, les mouvements d'entrée et de sortie du peigne sont parfaitement guidés en translation et ne risquent pas de provoquer des blocages par coincement. De plus, la coopération des rainures et nervures assure la retenue du berceau qui ne peut pas se décaler transversalement sous l'effet des efforts du brossage exercés sur le peigne.

Dans une forme d'exécution préférée, l'élément supérieur de la tête comporte, dans chacune de ses nervures de guidage du berceau, une série de trois crans assurant le calage en translation des doigts du levier de commande donc du berceau portant le peigne, respectivement, en position rétractée de retrait du peigne dans la tête, en position sortie du peigne pour brossage de poils courts et en position sortie du peigne pour brossage de poils longs.

Cette multiplication des positions avec calage du peigne, garantit son positionnement dans la tête, non seulement quand il est à l'intérieur de celle-ci mais aussi dans chacune de ses positions de travail, tout en permettant à l'utilisateur d'adapter le dépassement des dents à la longueur des poils de l'animal qu'il toilette.

Avantageusement, les moyens de commande du déplacement du berceau portant le peigne lui communiquent une course de déplacement supplémentaire, amenant ce berceau dans une position de maintenance dans laquelle sa zone de liaison avec le peigne vient au niveau d'encoches latérales de passage, ménagées dans les deux éléments constitutifs de la tête pour permettre, par un mouvement transversal, l'extraction du peigne hors du berceau et de la tête et son remplacement par un autre peigne ou un autre élément de toilettage.

Ainsi, même un utilisateur peu mécanicien, peut, sans avoir à démonter la tête, changer le peigne en lui communiquant un mouvement de coulissement transversal par rapport au berceau qui reste immobile dans la tête. Cela facilite son remplacement en cas d'usure, mais permet aussi de le remplacer par un peigne ou autre outil de toilettage assurant une fonction différente, ou de le retourner s'il comporte une double denture.

D'autres caractéristiques et avantages ressortiront de la description qui suit, en référence au dessin schématique annexé, représentant une forme d'exécution de ce peigne.
Figure 1 est une vue de côté en élévation d'une forme d'exécution de la brosse quand elle est engagée dans la fourrure d'un animal ;
Figure 2 est une vue de côté avec coupe partielle de la tête de la brosse de figure 1, quand le peigne est en position de rangement à l'intérieur de cette tête ;
Figures 3, 4 et 11 sont des vues partielles de côté et en coupe de la tête, lorsque le peigne est, respectivement, en position sortie pour brossage poils courts, en position sortie pour brossage poils longs et en position d'extraction et de remplacement ;
Figures 5 et 6 sont des vues en perspectives éclatées et en coupe partielle, quand on regarde la partie intérieure, respectivement, de l'élément supérieur de la tête et de l'élément inférieur de la même tête ;
Figures 7 et 8 sont des vues en perspective et à échelle agrandie de l'élément inférieur de la tête, respectivement seul et garni par les autres composants de cette tête ;
Figures 9 est 10 sont des vues en perspective et à échelle agrandie de l'élément supérieur de la tête, respectivement seul et garni par les autres composants de cette tête ;
Figure 12 est une vue en perspective de la tête quand celle-ci est en position d'extraction du peigne, celui-ci étant partiellement extrait par coulissement du berceau qui le porte.

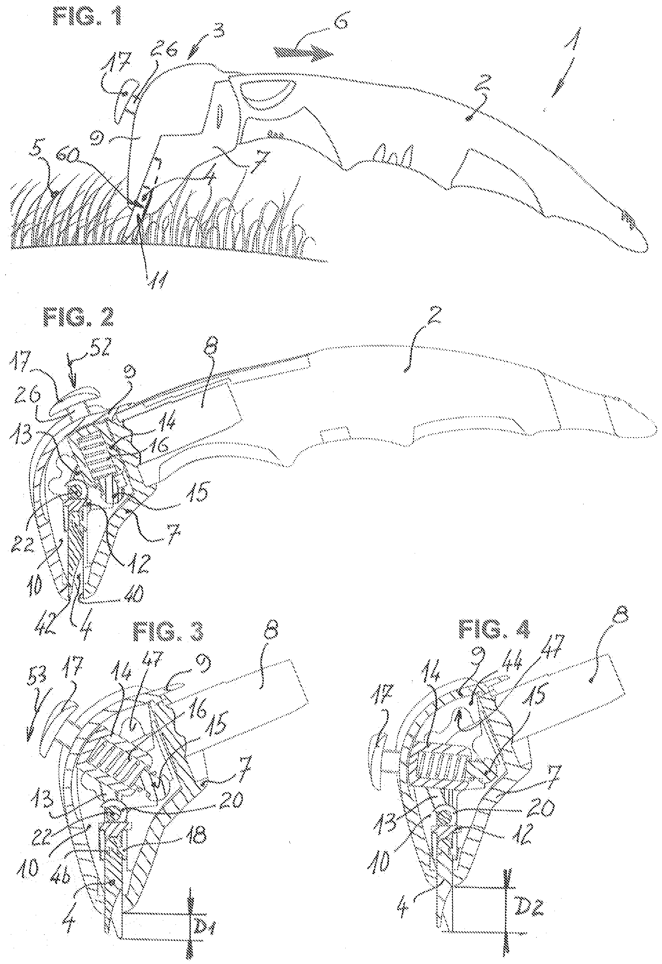

De manière générale et comme montré figure 1, la brosse 1 est composée d'un manche 2 et d'une tête 3 porteuse d'un peigne 4, métallique ou en matière synthétique, par exemple en polyamide. La denture du peigne 4 comprend une ou deux rangées de dents destinées à pénétrer dans la fourrure 5 d'un animal pour assurer le brossage de celle-ci par déplacement dans le sens de la flèche 6. Le peigne est de forme lamellaire et comporte deux faces planes et parallèles.

Comme montré aux figures 2 à 6, la tête 3 est composée d'un élément inférieur 7, porteur d'un tenon 8 de liaison avec le manche 2, et d'un élément supérieur 9 lié à l'élément 7 par des vis non représentées.

Le tenon 8 est muni de moyens, non représentés, d'encliquetage avec le manche 2. Cet aménagement permet d'utiliser le manche avec d'autres outils interchangeables de toilettage ou exerçant d'autres fonctions.

Dans une variante, non représentée, l'élément inférieur 7 est monolithique avec le manche, mais comporte la même structure que celle décrite ci-après pour assurer les mêmes fonctions permettant d'obtenir les mêmes résultats, sauf l'interchangeabilité de la tête avec le manche.

Les deux éléments 7 et 9 de la tête 9 délimitent un volume interne 10 avec une ouverture 11 délimitée entre ses bords en forme de lèvres. Ce volume, visible aux figures 2 à 4, contient les moyens de maintien du peigne 4 et ses moyens de déplacements et de commande de ce déplacement.

Les moyens de maintien du peigne 4 sont constitués par un berceau 12, tandis que ses moyens de déplacement comprennent une bielle 13, un levier de commande 14, avec pièce d'articulation 15 et ressort de rappel 16 (de préférence métallique), et un bouton de commande 17. Ces composants sont obtenus par moulage de matière synthétique et vont être décrits en détail en référence aux figures éclatées 5 et 6.

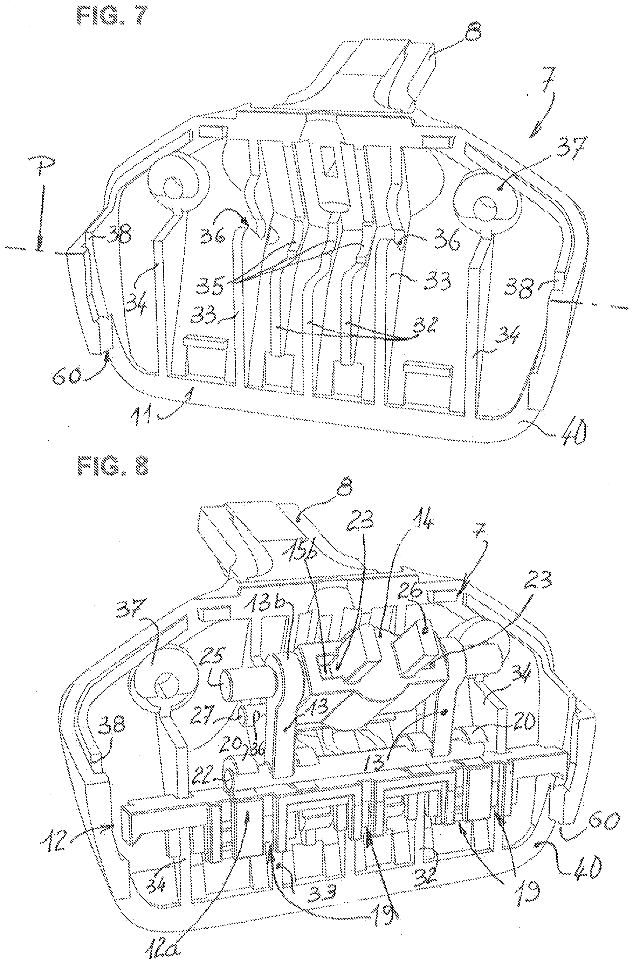

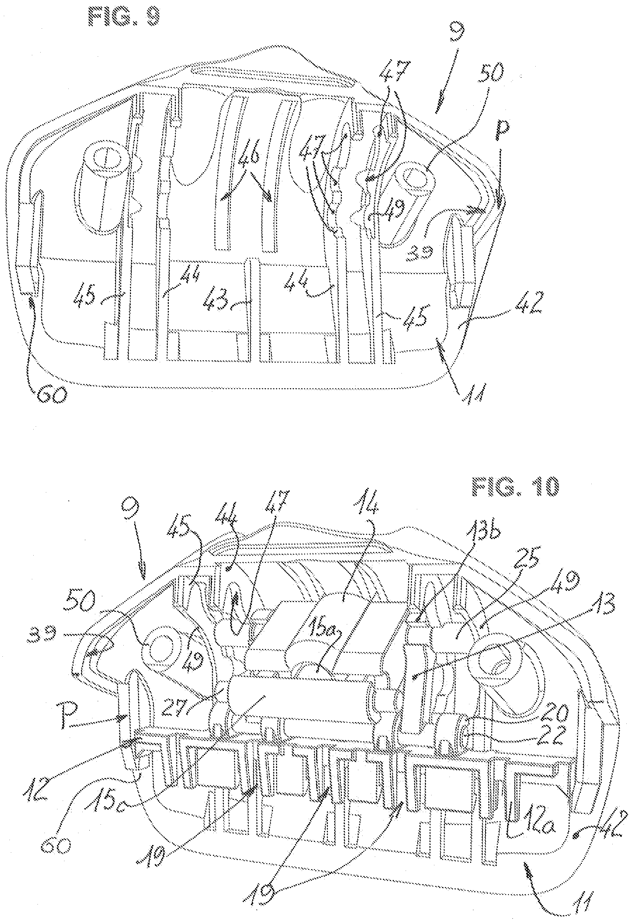

Le berceau 12 a une section transversale en U dont les deux ailes 12a sont munies de crans 18 qui, saillants de leurs faces internes, se font vis-à-vis, et sont disposés parallèlement à son âme. Ces crans constituent moyens de retenue du peigne 4 en s'engageant dans des rainures 4b ménagées dans son bord arrière 4a. Ces rainures sont disposées perpendiculairement à la direction des dents du peigne, opposées à ce bord arrière. Les figures 8 et 10 montrent que les faces externes des ailes 12a du berceau sont munies de rainures de guidage 19, qui sont parallèles à la direction des dents.

L'âme du berceau 12 est munie, en saillie de sa face extérieure, de plusieurs crochets 20, à savoir deux dans cette forme d'exécution. Ces crochets forment des paliers d'articulation pour un arbre transversal 22 s'étendant à l'une des extrémités de chacun des deux bras 13a constituant la bielle 13. L'autre extrémité de chaque bras 13a est munie d'un crochet 13b formant palier d'articulation.

Le levier de commande 14 comprend un corps tubulaire dans lequel est logé le ressort 16 centré par un tenon 15a saillant de la pièce d'articulation 15. La figure 8 montre que le corps tubulaire 14 est bordé par deux couloirs longitudinaux 23 dans lesquels coulissent deux bras 15b, parallèles au tenon 15a et disposés de part et d'autre de lui. Le corps du levier de commande 14 est aussi solidaire d'une part, des deux bouts d'arbres transversaux 25 saillant latéralement et montés pivotants dans les paliers 13b de la bielle, et, d'autre part, de deux tenons longitudinaux 26 servant à la fixation du bouton de manoeuvre 17.

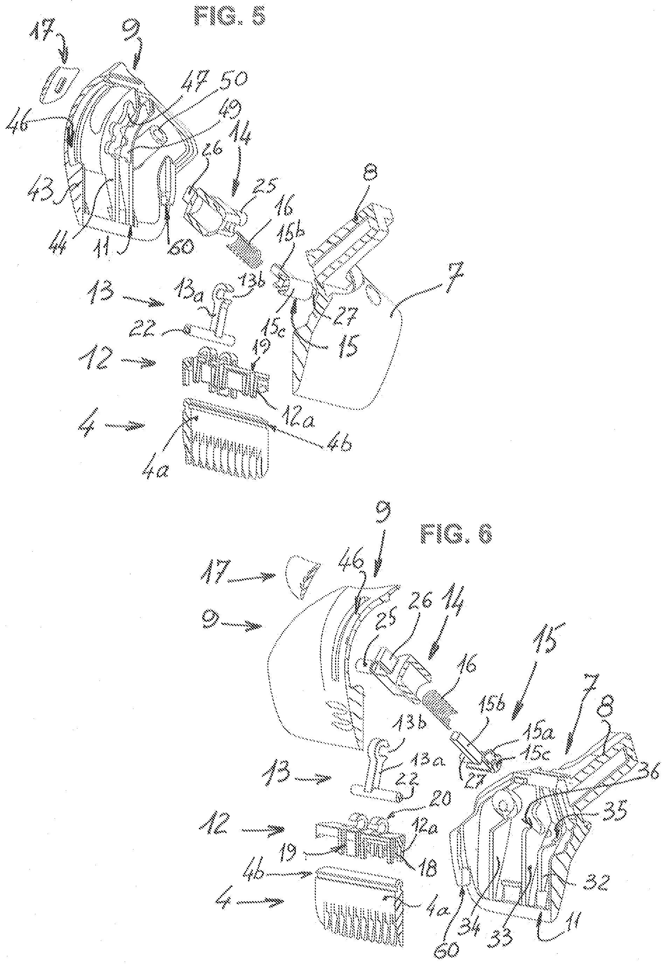

Les figures 5 et 10 montrent que la pièce d'articulation 15 comporte une traverse arrondie 15c prolongée par des bouts d'arbres circulaires 27.

Comme ces composants 12 à 16 se montent dans l'espace 10 délimité par les éléments 7et 9 du boitier, ces derniers vont maintenant être décrits en détail en référence aux figures 7 à 10.

Comme le montre en détail la figure 7, l'élément inférieur 7 de la tête 3 est constitué par une paroi concave brute d'injection comportant une face externe convexe lisse et une face interne hérissée de nervures, à savoir, trois nervures centrales 32 bordées par deux nervures intermédiaires 33 et par deux nervures latérales 34. Ces nervures sont destinées à coopérer avec les rainures 12 du berceau 12 pour guider ce dernier dans ses déplacements. Les rainures centrales 32 comportent chacune un fragment de palier circulaire 35 apte à recevoir, comme montré figure 8, la traverse arrondie 15c de la pièce d'articulation 15, tandis que chacune des traverses intermédiaires 33 comporte un palier profond 36, apte à recevoir l'un des deux bouts d'arbre 27 de la même traverse 15c, qui est ainsi parfaitement guidée en rotation.

L'élément inférieur 7 de la tête comporte en saillie de sa paroi des alésages lisses renforcés 37 pour le passage des vis de liaison avec l'élément supérieur 9 et comporte, dans son plan de liaison P, une nervure 38 montrée figure 7. La figure 9 montre que l'élément 9 comporte, à l'intérieur du bord interne de son plan de liaison P, un dégagement 39 apte, quand les éléments 7 et 9 sont assemblés, à recevoir la nervure 38 de l'élément 7 pour améliorer le positionnement relatif de ces éléments et masquer leur éventuel écartement.

Le bord avant de l'élément 7 comporte une lèvre 40 qui, en renfoncement par rapport au plan de liaison P, est destinée à venir en contact glissant avec le peigne, de la même façon que la lèvre 42 prévue en renfoncement du plan de liaison de l'élément supérieur 9.

Enfin, les deux éléments 7 et 9 comportent, de part et d'autre de l'ouverture 11 qu'ils délimitent, des encoches 60 de largeur au moins égale à l'épaisseur de la partie arrière du peigne 4 qui doit les traverser quand son berceau est en position de maintenance.

L'élément supérieur 9 de la tête 3, montré en détail figure 9, est constitué par une paroi concave brute d'injection comportant une face externe convexe lisse et, en saillie de sa face interne, une nervure centrale 43, deux nervures intermédiaires 44 et deux nervures latérales externes 45. Ces nervures sont parallèles à la direction de déplacement du peigne et destinées à coopérer avec les rainures 19 du berceau 12 pour guider ce dernier dans ses déplacements. La rainure centrale 43 est plus courte que les autres pour laisser place au levier de commande 15 et, en particulier à ses tenons 26, qui traversent la paroi de l'élément par deux fentes 46.

Dans cette forme d'exécution, les nervures 44 et 45 comporte chacune une série de trois crans circulaires 47 pouvant chacun coopérer avec l'un des bouts d'arbre 25 du levier de commande 14. Elles matérialisent les trois positions de calage du levier 14 et du peigne 4, à savoir position rétractée du peigne, position sortie pour fourrure à poils courts et position sortie pour fourrure à poils longs.

Les crans 47 des nervures externes 45 sont obturées, latéralement et vers l'extérieur, par un voile de matière 49 qui limite les éventuels mouvements transversaux du levier 14.

Enfin, l'élément 9 de la tête est solidaire de puits 50 de réception des vis assurant sa liaison avec l'élément inférieur 7.

A la figure 2, les composants de la tête 3 sont assemblés et le poussoir et dans la position de rétraction du peigne 4 dans cette tête. Les bouts d'arbres 25 du levier de commande 14 sont engagés dans les crans 47 et assurent le verrouillage du peigne 4 dans cette position. Le peigne est en totalité dans la tête, de sorte qu'il ne peut blesser personne et que sa denture est protégée.

Pour passer à la position de figure 3, dans laquelle le peigne est sorti pour le brossage d'une fourrure à poils courts, il faut d'abord exercer une pression sur le poussoir 17, dans le sens la flèche 52 de figure 2, pour déverrouiller en faisant sortir les bouts d'arbres 25 des crans 47, puis faire pivoter le levier 14 dans le sens de la flèche 53 de figure 3 jusqu'aux crans 47 suivants. Durant ce basculement le ressort 16 est comprimé et la pièce d'articulation 15 pivote dans les paliers fixes 35 et 36. Le relâchement de l'effort radial sur le poussoir 17 permet au ressort 16 de ramener le levier 14 en position de calage en engageant ses bouts d'arbres 27 dans la série suivante de crans 47.

Ce mouvement du levier 14 provoque, par la bielle 13 et le berceau 12, le déplacement longitudinal du peigne 4 entre les lèvres 40 et 42 des éléments de la tête et amène une partie du peigne 4 à dépasser de la tête d'une valeur D1, montrée figure 3.

A la figure 4, un déplacement du levier 14 dans les mêmes conditions, mais jusqu'à sa dernière position de crantage, fait sortir le peigne 4 d'une valeur D2, supérieure à D1, et correspondant au brossage d'une fourrure à poils longs.

Si durant le brossage, avec une brosse dans l'une ou l'autre des deux positions de brossage, les intervalles entre dents du peigne sont obturées par accumulation d'épillets, de poils morts et de poussières diverses, le toiletteur peut nettoyer aisément le peigne en provoquant sa rentrée dans la tête 3. Durant le mouvement de rétraction, dans le sens inverse de la flèche 53, les bords des deux lèvres 40 et 42 qui glissent sur les faces du peigne lamellaire arrêtent les poils qui dépassent des entredents. Il en résulte que les amas de poils sont arrêtés par les lèvres jusqu'à ce que le peigne soit totalement rétracté dans la tête.

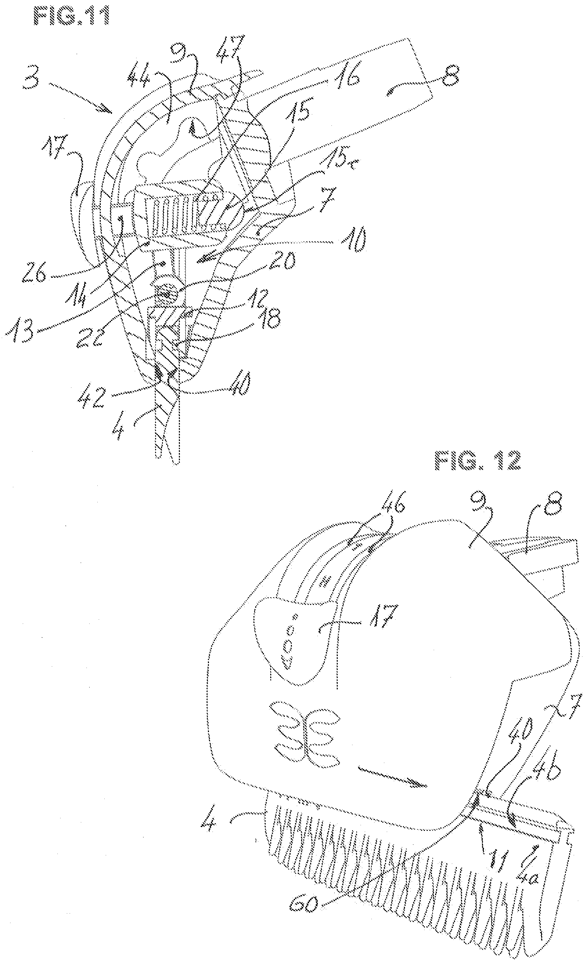

La figure 11 montre les deux éléments 7 et 9 de la tête et le mécanisme qu'elle contient sont structurés afin que le berceau puisse être amené dans une position supplémentaire de maintenance, non calée, dans laquelle la zone de liaison du berceau 12 avec le peigne 4 au niveau des encoches 60 permettant le déplacement transversal du peigne 4.

La figure 12 montre que dans cette position de maintenance, le peigne 4 peut aisément être extrait du berceau par coulissement, soit pour être remplacé par un peigne neuf, soit pour être remplacé par un peigne ayant une denture adaptée à la fourrure de l'animal, soit pour être retourné quand le peigne est à double denture, soit pour être remplacé par un autre outil de toilettage, comportant ou non des dents.

Pour ramener le peigne en position de travail avec calage, il suffit de commander sa rétraction au moyen du levier de commande 14.

Il ressort de la description qui précède que la tête de brosse selon l'invention permet :
- en position de travail, de modifier la longueur du dépassement du peigne pour l'adapter au pelage de l'animal devant être brossé,
- en position de rangement, de rentrer la totalité du peigne dans la tête pour supprimer le risque de blessure ou d'accrochage par ses dents acérées, mais aussi pour protéger ses dents contre les chocs et frottements, en réduisant ainsi son usure et ses détériorations, et,
- en position de maintenance, de procéder au remplacement du peigne et à son interchangeabilité, sans recours à aucun outil.

## Revendications

1. Tête de brosse de toilettage d'animaux à peigne rétractable manuellement, comprenant, à l'extrémité d'un manche (2), une tête (3) en deux éléments (7, 9) délimitant un espace intérieure (10) avec des lèvres (40, 42) d'éjection des poils, et un peigne lamellaire (4) monté coulissant dans la tête (3), entre une position de retrait dans celle-ci et au moins une position de brossage dans laquelle sa denture dépasse des lèvres (40, 42), ce peigne étant lié à des moyens (12 à 17) de commande manuelle de son déplacement, actionnables par un bouton (17) externe à la tête, tandis que la tête (3) comporte des moyens (25, 47) de calage d'au moins certaines positions longitudinales du peigne (4), **caractérisée en ce que** le peigne (4) est lié, de manière démontable et par coulissement transversal, à un berceau (12) déplaçable en translation dans la tête, et ce berceau (12) est lié aux moyens assurant son déplacement et comprenant:
- une bielle (13), dont l'une des extrémités est articulée sur le berceau,
- et un levier (14) de commande de déplacement, qui, articulé avec l'autre extrémité (13b) de la bielle :
∘ de première part, est muni d'au moins un tenon longitudinal (26) traversant la paroi de l'élément supérieur (9) de la tête, pour recevoir le bouton de commande (17),
∘ de deuxième part, est solidaire de doigts cylindriques latéraux (25) servant à l'articulation de la bielle (13) sur l'élément supérieur (9) de la tête et coopérant avec des crans de calage (47) ménagés dans l'élément supérieur (9) de la tête, ces crans assurant le calage du peigne dans plusieurs positions longitudinales du peigne (4),
∘ et, de troisième part, contient un corps d'articulation (15) monté pivotant dans l'élément inférieur (7) de la tête et sur lequel le levier (14) est monté coulissant avec interposition d'un ressort de rappel (16) travaillant en extension, pour plaquer ses doigts cylindriques (25) contre les crans de calage (47).

2. Tête de brosse à peigne rétractable selon la revendication 1 **caractérisée en ce que** le berceau (12) a une section transversale en forme de U dont les ailes (12a) sont munies de crans internes (18) se faisant vis-à-vis et aptes à être engagée dans des rainures opposées (4b) ménagées dans l'extrémité arrière (4a) du peigne, perpendiculairement à la denture et à opposée de celle-ci, ces ailes comportant à l'extérieur et de chaque côté, des rainures de guidage (19) venant coiffer des nervures (32 à 34 et 43 à 45) ménagées pour elles dans les deux éléments (7 et 9) de la tête, parallèlement à la direction de déplacement du berceau.

3. Tête de brosse à peigne rétractable selon les revendications 1 et 2 prises ensemble **caractérisée en ce que** l'élément supérieur (9) de la tête comporte, dans chacune de ses nervures (44 et 45) de guidage du berceau (12), une série de trois crans (47) assurant le calage en translation des doigts (25) du levier de commande (14), donc du berceau (12) portant le peigne (4), respectivement, en position rétractée de retrait du peigne dans la tête, en position sortie du peigne pour brossage de poils courts et en position sortie du peigne pour brossage de poils longs.

4. Tête de brosse à peigne rétractable selon la revendication 1 **caractérisée en ce que** les moyens (12 à 17) de commande du déplacement du berceau (12) portant le peigne (4) lui communiquent une course de déplacement supplémentaire, amenant ce berceau dans une position de maintenance dans laquelle sa zone de liaison avec le peigne (4) vient au niveau d'encoches latérales (60) ménagées dans les deux éléments constitutifs (7 et 9) de la tête pour permettre, par un mouvement transversal, l'extraction du peigne (4) hors du berceau (12) et de la tête, pour procéder à son remplacement par un autre peigne ou par un autre élément de toilettage.

## Patentansprüche

1. Kopf einer Bürste für Tierpflege mit manuell einziehbarem Kamm, der am Ende eines Griffs (2) einen Kopf (3) aus zwei Elementen (7, 9), die einen Innenraum (10) mit Lippen (40, 42) zum Auswerfen von Haaren begrenzen, und einen lamellenförmigen Kamm (4), der im Kopf (3) zwischen einer in den Kopf eingezogenen Position und wenigstens einer Bürstposition, in der dessen Zähne die Lippen (40, 42) überragen, gleitend montiert ist, aufweist, wobei der Kamm mit Mitteln (12 bis 17) zum manuellen Steuern seiner Verlagerung verbunden ist, die durch einen am Kopf außen befindlichen Knopf (17) betätigbar sind, während der Kopf (3) Mittel (25, 47) zum Festlegen wenigstens einiger der Längsposition des Kamms (4) aufweist, **dadurch gekennzeichnet, daß** der Kamm (4) in durch quer verlaufendes Gleiten demontierbarer Weise mit einer Halterung (12) verbunden ist, die im Kopf translatorisch verlagerbar ist, und daß die Halterung (12) mit den Mitteln verbunden ist, die dessen Verlagerung sicherstellen und die folgendes aufweisen:
- eine Triebstange (13), deren eines Ende an der Halterung angelenkt ist,
- und einen Hebel (14) zum Steuern der Verlagerung, der am anderen Ende (13b) der Triebstange angelenkt ist und
= einerseits mit wenigstens einem Längszapfen (26) versehen ist, der die Wandung des oberen Elements (9) des Kopfes durchdringt, um den Steuerungsknopf (17) aufzunehmen,
= andererseits mit zylindrischen seitlichen Fingern (25) fest verbunden ist, die der Anlenkung der Triebstange (13) am oberen Element (9) des Kopfes dienen und die mit im oberen Element (9) des Kopfes eingebrachten Festlegungsrasten (47) zusammenwirken, wobei die Rasten die Festlegung des Kamms in mehreren Längspositionen des Kamms (4) sicherstellen,
= und dritterseits einen Gelenkkörper (15) aufweist, der schwenkend im unteren Element (7) des Kopfes angebracht ist und auf dem der Hebel (14) mit einer eingefügten Rückstellfeder (16), die auf Zug arbeitet, gleitend angebracht ist, um die zylindrischen Finger (25) gegen die Festlegungsrasten (47) zu drücken.

2. Bürstenkopf mit einziehbarem Kamm gemäß Anspruch 1, **dadurch gekennzeichnet, daß** die Halterung (12) einen U-förmigen Querschnitt aufweist, dessen Schenkel (12a) mit inneren Rasten (18) versehen sind, die sich gegenüber liegen und dazu ausgelegt sind, in am hinteren Ende (4a) des Kamms eingebrachte gegenüberliegende Rillen (4b) senkrecht zur Zahnung und dieser gegenüberliegend einzugreifen, wobei die Flügel außen und auf jeder Seite Führungsrillen (19) aufweisen, die für diese in den beiden Elementen (7 und 9) des Kopfes ausgebildete Rippen (32 bis 34 und 43 bis 45) parallel zur Verlagerungsrichtung der Halterung bedecken.

3. Bürstenkopf mit einziehbarem Kamm gemäß Anspruch 1 und 2 zusammengenommen, **dadurch gekennzeichnet, daß** das obere Element (9) des Kopfes in jeder seiner Führungsrippen (44 und 45) der Halterung (12) eine Reihe von drei Rasten (47) aufweist, die die translatorische Festlegung der Finger (25) des Steuerhebels (14) in zurückgezogener Rückzugsposition des Kamms im Kopf, in ausgefahrener Position des Kamms zum Bürsten kurzer Haare und in ausgefahrener Position des Kamms zum Bürsten langer Haare sicherstellen.

4. Bürstenkopf mit einziehbarem Kamm gemäß Anspruch 1, **dadurch gekennzeichnet, daß** die Mittel (12 bis 17) zum Steuern der Verlagerung der den Kamm (4) tragenden Halterung (12) dieser einen zusätzlichen Verlagerungsweg geben, der die Halterung in eine Wartungsposition bringt, in der die Zone der Verbindung mit dem Kamm (4) in den Bereich von seitlichen Einkerbungen kommt, die in den beiden den Kopf bildenden Elementen (7 und 9) ausgebildet sind, um durch eine Querbewegung ein Herausnehmen des Kamms (4) aus der Halterung (12) und dem Kopf zu ermöglichen, um seinen Austausch durch einen anderen Kamm oder durch ein anderes Pflegeelement durchzuführen.

## Claims

1. Head of an animal grooming brush with a manually retractable comb, comprising, at the end of a handle (2), a head (3) with two elements (7, 9) defining an inner space (10) with lips (40, 42) for ejecting hairs, and a lamellar comb (4) slidably mounted in the head (3), between a removal position in the latter and at least one brushing position wherein the toothing thereof stands out from the lips (40, 42), with this comb being connected to means (12 to 17) for manually controlling the movement thereof, which can be actuated by a button (17) external to the head, while the head (3) comprises means (25, 47) for setting of at least some longitudinal positions of the comb (4), **characterised in that** the comb (4) is connected, in a removable manner and by transverse sliding, to a cradle (12) that can be moved in translation in the head, and this cradle (12) is connected to the means that ensure the movement thereof and comprising:
- a connecting rod (13), of which one of the ends is articulated on the cradle,
- and a lever (14) for controlling the movement, which, articulated with the other end (13b) of the connecting rod:
-- firstly, is provided with at least one longitudinal tenon (26) passing through the wall of the upper element (9) of the head, in order to receive the control button (17),
-- secondly, is integral with the lateral cylindrical pawls (25) used for the articulation of the connecting rod (13) on the upper element (9) of the head and engaging with setting notches (47) arranged in the upper element (9) of the head, with these notches providing the setting of the comb in a plurality of longitudinal positions of the comb (4),
-- and, thirdly, contains an articulation body (15) pivotably mounted in the lower element (7) of the head is slidably mounted with interposition of a return spring (16) working in extension, in order to thrust the cylindrical pawls thereof (25) against the setting notches (47).

2. Head of a brush with retractable comb according to claim 1 **characterised in that** the cradle (12) has a U-shaped transverse section of which the wings (12a) are provided with internal notches (18) facing and able to be engaged in opposite grooves (4b) arranged in the rear end (4a) of the comb, perpendicularly to the toothing and opposite the latter, with these wings comprising outside and on each side, guiding grooves (19) that cover ribs (32 to 34 and 43 to 45) arranged for them in the two elements (7 and 9) of the head, parallel to the direction of movement of the cradle.

3. Head of a brush with retractable comb according to claims 1 and 2 prises ensemble **characterised in that** the upper element (9) of the head comprises, in each one of the ribs (44 and 45) therefore for guiding the cradle (12), a series of three notches (47) that providing the setting in translation of the pawls (25) of the control lever (14), therefore of the cradle (12) supporting the comb (4), respectively, in retracted removal position of the comb in the head, in exited position of the comb for the brushing of short hair and in exited position of the comb for the brushing of long hair.

4. Head of a brush with retractable comb according to claim 1 **characterised in that** the means (12 to 17) for controlling the movement of the cradle (12) supporting the comb (4) communicating to it an additional stroke of movement, bringing this cradle in a maintenance position wherein its linkage zone with the comb (4) comes on lateral notches (60) arranged in the two elements (7 and 9) that constitute the head that allows, via a transverse movement, the comb (4) to be removed from the cradle (12) and from the head, in order to proceed with replacing it with another comb or with another grooming element.
